# EUROPEAN PATENT APPLICATION

(11) **EP 3 845 587 A1**
(43) Date of publication of application: **07.07.2021**
(21) Application number: 19220261.2
(22) Date of filing: 31.12.2019
(51) Int. Cl.: C08K 3/04, C08K 7/06, C08L 69/00, C08K 5/00

(54) **MICROWAVE ABSORBING MATERIALS AND MOLDED ARTICLES FOR AUTOMOTIVE RADAR SENSOR APPLICATIONS**

(71) Applicant: SHPP Global Technologies B.V., 4612 PX Bergen op Zoom (NL)
(72) Inventor: Silvi, Norberto, New York 12158-9765 (US); SAS, Martin, 4612 PX Bergen op Zoom (NL); THAMBI, Joel, 4612 PX Bergen op Zoom (NL); ZHAO, Wei, Indiana 47260 (US); XU, Jianhua, Indiana 47260 (US)
(74) Representative: Dehns

(57) **Abstract**

Disclosed is a composite from about 50 wt. % to about 90 wt. % of a thermoplastic resin, wherein the thermoplastic resin comprises a polycarbonate polysiloxane copolymer; and from about 10 wt. % to about 50 wt. % of a carbon-based filler. The composite exhibits a dielectric constant ε' of between 5 and 20 and a dissipation loss ε" of between 0.1 and 6, measured at frequencies between about 10 and 120 GHz.

## Description

### FIELD OF THE DISCLOSURE

The present disclosure relates to materials exhibiting microwave absorptive properties, and in particular to materials exhibiting microwave absorptive properties for automotive radar sensor applications.

### BACKGROUND OF THE DISCLOSURE

The automotive industry is increasingly employing electronic radar sensors to provide drivers assistance with features such as adaptive cruise control, parking/lane change assist, back-up warning, blind spot detection, collision avoidance, and many others. To ensure proper operation of these sensors, these devices must be protected from potentially spurious sources of electromagnetic radiation. Microwave radiation, from about 1 GHz (300 mm wavelength) to 300 GHz frequency (1 mm wavelength), is the most common source of electromagnetic energy used in the operation of radar sensors for automotive applications. Metals (aluminum, stainless steel, etc), polymer composite materials containing metallic fillers, such as aluminum flakes, stainless steel fibers and silver-coated polyamide fibers, metalized coatings, inherently conductive polymers (polyacetylene, polypyrrole, polythiophene, polyaniline, etc), silicon carbide, ferrites (Fe₂O₃+Ni/Zn/Cd/Co oxide), and carbonil iron are some of the materials that are being used to shield automotive radar sensors from damaging microwave electromagnetic radiation.

Metals are the most common materials for microwave (MW) shielding, but they are heavy and expensive. Metals also require complex processing to be shaped into a final part. Polymers or carbon composites are typically preferred because of their lower density, lower cost, easy of shaping, and ease of manufacture into high volume molded parts. Further, carbon fillers may be used in the composite to trap microwave radiation in enclosure walls thereby protecting the electronic sensors inside the cavity. A moderate electrical conductivity and large dielectric and magnetic losses are usually required for materials used in microwave shielding.

Aspects of the present disclosure addresses these and other needs.

### SUMMARY

Aspects of the disclosure relate to a composite comprising: from about 50 wt. % to about 90 wt. % of a thermoplastic resin, wherein the thermoplastic resin comprises a polycarbonate polysiloxane copolymer; and from about 10 wt. % to about 50 wt. % of a carbon-based filler, wherein the composite exhibits a dielectric constant ε' of between 5 and 20 and a dissipation loss ε" of between 0.1 and 6, measured at frequencies between about 10 and 120 GHz. wherein the combined weight percent value of all components does not exceed 100 wt. %, and all weight percent values are based on the total weight of the composite.

### BRIEF DESCRIPTION OF THE FIGURES

FIG. 1 presents Table 1 including the formulations of CE1-CE5 and E1-E5.
FIG. 2 presents Table 2 including the surface and volume electrical resistivities for CE1-CE5 and E1-E5.
FIG. 3 shows a graphical representation of the electrical volume resistivities for CE1-CE5 and E1-E5.
FIG. 4 shows a graphical representation of the volume resistivity for samples CE1-CE5 and E1-E5 as the carbon black loading is adjusted.
FIGS. 5A and 5B presents a diagram of the transmission mode and metal-backed reflection mode, respectively, of the Free Space Method for determining dielectric constant ε' and dissipation loss ε".
FIG. 6 shows a graphical representation of the Dielectric Constant (ε', real part of the complex permittivity) for CE1-CE5 and E1-E5 at frequencies from 18 GHz to 26.5 GHz.
FIG. 7 shows a graphical representation of the Dielectric Loss (ε", imaginary part of the complex permittivity) for CE1-CE5 and E1-E5 at frequencies from 18 GHz to 26.5 GHz.
FIG. 8 shows a graphical representation of the Return Loss (frontside of the plaque) obtained in metal-backed reflection mode for CE1-CE5 and E1-E5 at frequencies from 18 GHz to 26.5 GHz.
FIG. 9 shows a graphical representation of the Return Loss (backside of the plaque) obtained in metal-backed reflection mode for CE1-CE5 and E1-E5 at frequencies from 18 GHz to 26.5 GHz.
FIG. 10 shows a graphical representation of the Attenuation Constant values for CE1-CE5 and E1-E5 at frequencies from 18 GHz to 26.5 GHz.
FIG. 11 shows a graphical representation of the Total Shielding Effectiveness (SE) values for CE1-CE5 and E1-E5 at frequencies from 18 GHz to 26.5 GHz.
FIG. 12 shows a graphical representation of the Percent Absorbed Power obtained in Transmission mode for samples CE1-CE5 and E1-E5 at frequencies from 18 GHz to 26.5 GHz.
FIG. 13 shows a graphical representation of the Percent Absorbed Power obtained in Metal-backed Reflection mode for samples CE1-CE5 and E1-E5 at frequencies from 18 GHz to 26.5 GHz.
FIG. 14 shows a graphical representation of the Dielectric Constant (ε', real part of the complex permittivity) and Dielectric Loss (ε", imaginary part of the complex permittivity) for CE1-CE5 and E1-E5 at frequencies 75 GHz to 110 GHz.
FIG. 15 shows a graphical representation of the Return Loss (frontside of the plaque) obtained in Metal-backed reflection mode for CE1-CE5 and E1-E5 at frequencies 75 GHz to 110 GHz.
FIG. 16 shows a graphical representation of the Attenuation Constant values for CE1-CE5 and E1-E5 at frequencies 75 GHz to 110 GHz.
FIG. 17 shows a graphical representation of the Total Shielding Effectiveness (SE) values for CE1-CE5 and E1-E5 at frequencies 75 GHz to 110 GHz.
FIG. 18 shows a graphical representation of the Percent Power in Transmission mode for sample CE1 at frequencies 75 GHz to 110 GHz.
FIG. 19 shows a graphical representation of the Percent Power in Transmission mode for sample CE2 at frequencies 75 GHz to 110 GHz.
FIG. 20 shows a graphical representation of the Percent Power in Transmission mode for sample CE3 at frequencies 75 GHz to 110 GHz.
FIG. 21 shows a graphical representation of the Percent Power in Transmission mode for sample CE4 at frequencies 75 GHz to 110 GHz.
FIG. 22 shows a graphical representation of the Percent Power in Transmission mode for sample CE5 at frequencies 75 GHz to 110 GHz.
FIG. 23 shows a graphical representation of the Percent Power in Transmission mode for sample E1 at frequencies 75 GHz to 110 GHz.
FIG. 24 shows a graphical representation of the Percent Power in Transmission mode for sample E2 at frequencies 75 GHz to 110 GHz.
FIG. 25 shows a graphical representation of the Percent Power in Transmission mode for sample E3 at frequencies 75 GHz to 110 GHz.
FIG. 26 shows a graphical representation of the Percent Power in Transmission mode for sample E4 at frequencies 75 GHz to 110 GHz.
FIG. 27 shows a graphical representation of the Percent Power in Transmission mode for sample E5 at frequencies 75 GHz to 110 GHz.

### DETAILED DESCRIPTION

The present disclosure relates to microwave shielding and absorptive composite materials. Electronic radar sensors are used in the automotive industry to aid drivers in a variety of operations including cruise control, lane change assistance, self-parking, and blind spot detection, among others. These sensors must be protected from electromagnetic interference that can damage their normal operation. Metals, such as aluminum and stainless steel, are commonly used as microwave shielding materials, but they are heavy, expensive, and demand complex processing to be shaped into a final part. Polymer/carbon composites may be more desirable as a lower density, lower cost alternative. Polymer/carbon composites are also more easily molded and manufactured into high volume molded parts. Carbon fillers of the composite may isolate microwave radiation in enclosure walls to protect the electronic sensors inside the cavity.

Accordingly, moderate electrical conductivity, and large dielectric and magnetic losses are some of the features required for materials used in microwave shielding. The present disclosure provides a series of polymer-based materials comprising carbon as a microwave absorbing filler, and having a polymer/filler ratio that provides an appropriate balance between electrical conductivity and microwave absorption efficiency.

As demonstrated herein, composites having a relatively high electrical conductivity (corresponding to a volume resistivity of less than 100 Ohm.cm) behave dielectrically as metals, and are therefore microwave reflecting rather than microwave absorbing. Radar absorbing materials are currently primarily sold commercially in the form of elastomer-based flexible sheets or blankets, liquid paints, and closed-cell polymer foams. The present disclosure provides thermoplastic-based carbon-filled materials that are rigid and of high modulus that maintain a certain shape when molded, and are suitable as internal or external components to trap or isolate electromagnetic radiation in automotive sensor applications.

Carbon fillers, including but not limited to powder, platelets, fibers, nanotubes, are currently used to impart electromagnetic interference properties to polymers, which when unfilled are mostly transparent (non-absorbing, non-reflecting) to microwave radiation. When used in under-the-hood automotive enclosures, for example, polymer-carbon composites can protect the radar sensors located inside the enclosure thus preventing the electromagnetic radiation from an outside, or even an inside, source to deteriorate the sensor's electronic performance. Also, carbon-containing elastomers such as silicone, polyurethane and nitrile rubber, among several others, can be used as high-loss protective blankets to attenuate the resonant frequencies generated by the normal operation of the sensors inside the cavity. The present disclosure describes thermoplastic-based carbon-filled materials that are rigid and of high modulus that maintain a certain shape when molded, and they can be used as internal or external components to trap electromagnetic radiation in automotive sensor applications.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; and the number or type of embodiments described in the specification.

### Composite

Aspects of the disclosure relate to a composite comprising a thermoplastic polymer component (including a polycarbonate polysiloxane copolymer) and a carbon filler. The thermoplastic polymer component may include any suitable thermoplastic polymer. Examples include, but are not limited to, polycarbonate, polyetherimide, liquid crystal polymer, polyamide, polyimide, polyester, copolymers thereof, blends thereof, or combinations thereof.

In certain aspects, the composite has a surface electrical resistivity greater than 100 Ohm/square and a volume electrical resistivity greater than 1000 Ohm.cm when measured according to ASTM D257 and using a specimen having a thickness of 0.125 inches (3.175 mm). Further, the composite may exhibit a dielectric constant Dk (real part of complex permittivity ε') of from about 5 to about 35 and may exhibit a dissipation loss (imaginary part of complex dielectric permittivity ε") of from about 0.1 to about 5. The ratio of the dissipation loss to the dielectric constant, ε"/ε', (referred to as the dissipation factor, Df, or tan delta) for the composite may be from about 0.003 to about 1.

A molded plaque formed from the disclosed composite may be suitable as an external or internal component of an electric device used in microwave absorbing or shielding applications. Experimentation showed that plaques molded from the materials of this invention are capable of absorbing at least 60% (-4dB of reflection loss) of the incoming microwave radiation somewhere in the 2-30 GHz range, with an absorption bandwidth at - 10dB (90% absorption efficiency) of at least 0.5 GHz. The molded plaque may have a thickness of from 1 millimeter (mm) to about 5 mm. In various examples, the molded plaque may have a thickness of 0.125 inches (in).

In various aspects, the present disclosure provides composite materials useful for the manufacture of enclosures that can isolate electronic sensors from damaging microwave electromagnetic energy. These materials have been evaluated for dielectric properties, such as complex permittivity, reflection and insertion loss, attenuation, and shielding effectiveness, among others, at frequencies from about 10 GHZ and 110 GHz. Further disclosed herein are radar sensor components (plates, enclosures, covers, etc) manufactured from these materials, and articles (sensors, cameras, electronic control units (ECUs)) manufactured from these components.

Further disclosed is a component of an automotive radar sensor, such as, for example, a plate, enclosure, or cover, which is molded from a material comprising a polymer and a carbon filler, with the molded part having certain design, average thickness, microwave absorption efficiency, absorption bandwidth, and a certain surface/volume electrical resistivity. Still another aspect of the present disclosure is an article, such as, for example, a radar sensor, camera, ECU, comprising a molded part made from a radar absorbing material, with such molded part having at least two openings to allow the transmission of microwave radiation between a transmitting antenna and a receiving antenna located in the printed circuit board of the sensor. Automotive radar sensors for lane-change assistance, self-parking, blind spot detection and collision avoidance typically operate at 24GHz of frequency; those for adaptive cruise control operate at 77 GHz frequency. Accordingly, composites of the present disclosure have been observed in the K-band, which includes the 24GHz frequency, and in the W-band, which includes the 77 GHz frequency.

### Polymer Base Resin

In an aspect, the polymer composition may comprise a polymer base resin. In various aspects, the polymer base resin can comprise a thermoplastic resin or a thermoset resin. The thermoplastic resin can comprise polypropylene, polyethylene, ethylene based copolymer, polyamide, polycarbonate, polyester, polyoxymethylene (POM), polybutylene terephthalate (PBT), polyethylene terephthalate (PET), polycyclohexylendimethylene terephthalate (PCT), liquid crystal polymers (LPC), polyphenylene sulfide (PPS), polyphenylene ether (PPE), polyphenylene oxide-polystyrene blends, polystyrene, high impact modified polystyrene, acrylonitrile-butadiene-styrene (ABS) terpolymer, acrylic polymer, polyetherimide (PEI), polyurethane, polyetheretherketone (PEEK), polylactic acid (PLA) based polymers, poly ether sulphone (PES), and combinations thereof. The thermoplastic resin can also include thermoplastic elastomers such as polyamide and polyester based elastomers. The base substrate can also comprise blends and/or other types of combination of resins described above. In various aspects, the polymer base resin can also comprise a thermosetting polymer. Appropriate thermosetting resins can include phenol resin, urea resin, melamine-formaldehyde resin, urea-formaldehyde latex, xylene resin, diallyl phthalate resin, epoxy resin, aniline resin, furan resin, polyurethane, or combinations thereof.

The polymer base resin of the present disclosure may include a polyamide resin, or a combination of polyamide resins. Polyamide resins useful in the practice of the present invention include a generic family of resins referred to as nylons, which may be characterized by the presence of an amide group (-C(O)NH-). Polyamides, including also polyphthalamides (PPA), suitable for use in the present method include but are not limited to polyamide-6, polyamide-6,6, polyamide-4,6, polyamide 9T, polyamide 10T, polyamide-11, polyamide-12, polyamide-6,10, polyamide-6,12, polyamide 6/6,6, polyamide-6/6,12, polyamide MXD6, polyamide-6T, polyamide-6I, polyamide-6/6T, polyamide-6/61, polyamide-6, 6/6T, polyamide-6,6/6I, polyamide- 6/6/1761, polyamide-6,6/6T/6I, polyamide-6/12/6T, polyamide-6,6/12/6T, polyamide-6/12/6I, polyamide-6,6/12/6I, and combinations thereof. Nylon-6 and nylon-6,6 represent common polyamides and are available from a variety of commercial sources. Polyamides, however, such as nylon-4,6, nylon-12, nylon-6,10, nylon 6,9, nylon 6/6T and nylon 6,6/6T having triamine contents below about 0.5 wt. %, as well as others, such as amorphous nylons may also be useful. In an example, the polymer composition comprises polyamide-6.

Polycarbonates, and combinations comprising thereof, may also be used as the polymer base resin. As used herein, "polycarbonate" refers to an oligomer or polymer comprising residues of one or more dihydroxy compounds, e.g., dihydroxy aromatic compounds, joined by carbonate linkages; it also encompasses homopolycarbonates, copolycarbonates, and (co)polyester carbonates. The terms "residues" and "structural units", used in reference to the constituents of the polymers, are synonymous throughout the specification.

In certain aspects the polycarbonate polymer is a Bisphenol-A polycarbonate, a high molecular weight (Mw) high flow/ductile (HFD) polycarbonate, a low Mw HFD polycarbonate, or a combination thereof.

The terms "BisA," "BPA," or "bisphenol A," which can be used interchangeably, as used herein refers to a compound having a structure represented by formula (1): 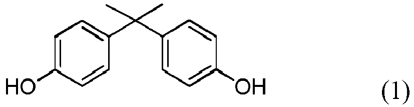 BisA can also be referred to by the name 4,4'-(propane-2,2-diyl)diphenol; p,p'-isopropylidenebisphenol; or 2,2-bis(4-hydroxyphenyl)propane. BisA has the CAS # 80-05-7.

In one example, the composite may comprise a linear, general purpose polycarbonate homopolymer resin, such as PC 105, a 100 grade polycarbonate powder available from SABIC. In further examples, the composite may comprise a linear high flow polycarbonate such as ML5221, a linear polycarbonate having a melt flow rate of 25 grams per 10 minutes (g/10 min) when tested according to ASTM D1238, available from SABIC. A high flow polycarbonate may refer to a polycarbonate having a flow rate of at least about 15 g/10 min or at least about 18 g/10 min or at least about 20 g/10 min when tested according to ASTM D1238.

In addition to the polycarbonates described above, combinations of the polycarbonate with other thermoplastic polymers, for example combinations of homopolycarbonates, copolycarbonates, and polycarbonate copolymers with polyesters, can be used. Useful polyesters include, for example, poly(alkylene dicarboxylates), liquid crystalline polyesters, and polyester copolymers. The polyesters described herein can generally be completely miscible with the polycarbonates when blended.

A combination of a first and a second (or more) polycarbonate-polysiloxane copolymers can be used, wherein the average value of E of the first copolymer is less than the average value of E of the second copolymer.

In an aspect, the polydiorganosiloxane blocks are of formula (2) 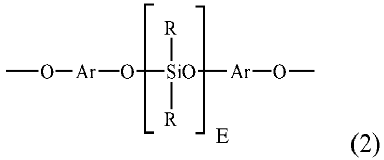 wherein E is as defined above; each R can be the same or different, and is as defined above; and Ar can be the same or different, and is a substituted or unsubstituted C₆-C₃₀ arylene, wherein the bonds are directly connected to an aromatic moiety. Ar groups in formula (2) can be derived from a C₆-C₃₀ dihydroxyarylene compound, for example a dihydroxyarylene compound. Dihydroxyarylene compounds are 1,1-bis(4-hydroxyphenyl) methane, 1,1-bis(4-hydroxyphenyl) ethane, 2,2-bis(4-hydroxyphenyl) propane, 2,2-bis(4-hydroxyphenyl)butane, 2,2-bis(4-hydroxyphenyl)octane, 1,1-bis(4-hydroxyphenyl)propane, 1,1-bis(4-hydroxyphenyl) n-butane, 2,2-bis(4-hydroxy-1-methylphenyl)propane, 1,1-bis(4-hydroxyphenyl) cyclohexane, bis(4-hydroxyphenyl sulfide), and 1,1-bis(4-hydroxy-t-butylphenyl) propane. Combinations comprising at least one of the foregoing dihydroxy compounds can also be used.

In another aspect, polydiorganosiloxane blocks can be of formula (3) 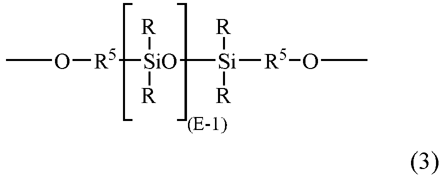 wherein R and E are as described above, and each R⁵ is independently a divalent C₁-C₃₀ organic group, and wherein the polymerized polysiloxane unit is the reaction residue of its corresponding dihydroxy compound. In one aspect, the polydiorganosiloxane blocks are of formula (5): 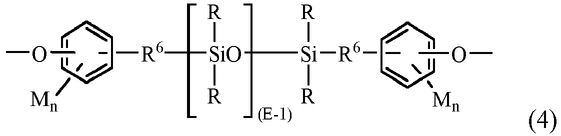 wherein R and E are as defined above. R⁶ in formula (4) is a divalent C₂-C₈ aliphatic. Each M in formula (4) can be the same or different, and can be a halogen, cyano, nitro, C₁-C₈ alkylthio, C₁-C₈alkyl, C₁-C₈ alkoxy, C₂-C₈ alkenyl, C₂-C₈ alkenyloxy, C₃-C₈ cycloalkyl, C₃-C₈ cycloalkoxy, C₆-C₁₀ aryl, C₆-C₁₀ aryloxy, C₇-C₁₂ aralkyl, C₇-C₁₂ aralkoxy, C₇-C₁₂ alkylaryl, or C₇-C₁₂ alkylaryloxy, wherein each n is independently 0, 1, 2, 3, or 4.

In an aspect, M is bromo or chloro, an alkyl such as methyl, ethyl, or propyl, an alkoxy such as methoxy, ethoxy, or propoxy, or an aryl such as phenyl, chlorophenyl, or tolyl; R⁶ is a dimethylene, trimethylene or tetramethylene; and R is a C₁₋₈ alkyl, haloalkyl such as trifluoropropyl, cyanoalkyl, or aryl such as phenyl, chlorophenyl or tolyl. In another embodiment, R is methyl, or a combination of methyl and trifluoropropyl, or a combination of methyl and phenyl. In still another embodiment, R is methyl, M is methoxy, n is one, R⁶ is a divalent C₁-C₃ aliphatic group. Specific polydiorganosiloxane blocks are of the formula 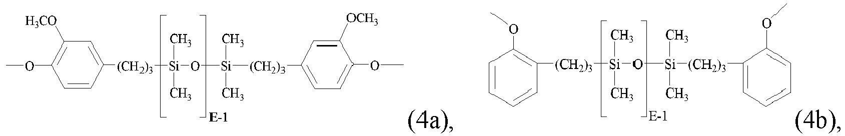 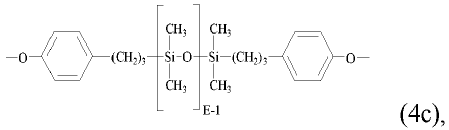 or a combination comprising at least one of the foregoing, wherein E has an average value of 2 to 200, 2 to 125, 5 to 125, 5 to 100, 5 to 50, 20 to 80, or 5 to 20.

Blocks of formula (4) can be derived from the corresponding dihydroxy polydiorganosiloxane, which in turn can be prepared effecting a platinum-catalyzed addition between the siloxane hydride and an aliphatically unsaturated monohydric phenol such as eugenol, 2-alkylphenol, 4-allyl-2-methylphenol, 4-allyl-2-phenylphenol, 4-allyl-2-bromophenol, 4-allyl-2-t-butoxyphenol, 4-phenyl-2-phenylphenol, 2-methyl-4-propylphenol, 2-allyl-4,6-dimethylphenol, 2-allyl-4-bromo-6-methylphenol, 2-allyl-6-methoxy-4-methylphenol and 2-allyl-4,6-dimethylphenol. The polysiloxane-polycarbonate copolymers can then be manufactured, for example, by the synthetic procedure of European Patent Application Publication No. 0 524 731 A1 of Hoover, page 5, Preparation 2.

Transparent polysiloxane-polycarbonate copolymers can comprise carbonate units (1) derived from bisphenol A, and repeating siloxane units or a combination comprising at least one of the foregoing (specifically of formula 4a), wherein E has an average value of 4 to 50, 4 to 15, specifically 5 to 15, more specifically 6 to 15, and still more specifically 7 to 10. The transparent copolymers can be manufactured using one or both of the tube reactor processes described in U.S. Patent Application No. 2004/0039145A1 or the process described in U.S. Patent No. 6,723,864 can be used to synthesize the poly(siloxane-carbonate) copolymers.

The polysiloxane-polycarbonate copolymers can comprise 50 wt. % to 99 wt. % of carbonate units and 1 wt. % to 50 wt. % siloxane units. Within this range, the polyorganosiloxane-polycarbonate copolymer can comprise 70 wt. %, to 98 wt. %, more specifically 75 wt. % to 97 wt. % of carbonate units and 2 wt. % to 30 wt. %, more specifically 3 wt. % to 25 wt. % siloxane units.

In some aspects, a blend can be used, in particular a blend of a bisphenol A homopolycarbonate and a polysiloxane-polycarbonate block copolymer of bisphenol A blocks and eugenol capped polydimethylsiloxane blocks, of the formula (5) 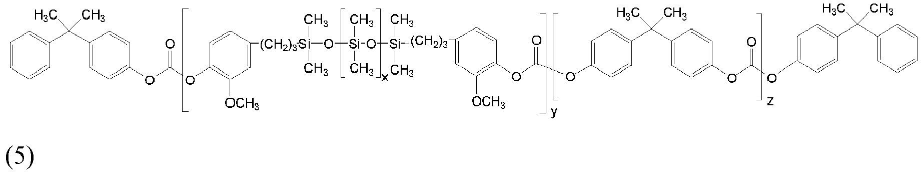 wherein x is 1 to 200, specifically 5 to 85, specifically 10 to 70, specifically 15 to 65, and more specifically 40 to 60; y is 1 to 500, or 10 to 200, and z is 1 to 1000, or 10 to 800. In an embodiment, x is 1 to 200, y is 1 to 90 and z is 1 to 600, and in another embodiment, x is 30 to 50, y is 10 to 30 and z is 45 to 600. The polysiloxane blocks may be randomly distributed or controlled distributed among the polycarbonate blocks.

In one aspect, the polysiloxane-polycarbonate copolymer can comprise 10 wt% or less, specifically 6 wt% or less, and more specifically 4 wt% or less, of the polysiloxane based on the total weight of the polysiloxane-polycarbonate copolymer, and can generally be optically transparent and are commercially available under the designation EXL-T from SABIC. In another aspect, the polysiloxane-polycarbonate copolymer can comprise 10 wt% or more, specifically 12 wt% or more, and more specifically 14 wt% or more, of the polysiloxane copolymer based on the total weight of the polysiloxane-polycarbonate copolymer, are generally optically opaque and are commercially available under the trade designation EXL-P from SABIC.

Polyorganosiloxane-polycarbonates can have a weight average molecular weight of 2,000 Daltons to 100,000 Daltons, specifically 5,000 to 50,000 Daltons as measured by gel permeation chromatography using a crosslinked styrene-divinyl benzene column, at a sample concentration of 1 milligram per milliliter, and as calibrated with polycarbonate standards.

The polyorganosiloxane-polycarbonates can have a melt volume flow rate, measured at 300 °C/1.2 kg, of 1 to 50 cubic centimeters per 10 minutes (cm³/10 min), specifically 2 to 30 cm³/10 min. Mixtures of polyorganosiloxane-polycarbonates of different flow properties can be used to achieve the overall desired flow property.

Non-limiting examples of polysiloxane-polycarbonate copolymers can comprise various copolymers available from SABIC. In an aspect, the polysiloxane-polycarbonate copolymer can contain 6 % by weight polysiloxane content based upon the total weight of the polysiloxane-polycarbonate copolymer. In various aspects, the 6 % by weight polysiloxane block copolymer can have a weight average molecular weight (Mw) of from about 23,000 to 24,000 Daltons using gel permeation chromatography with a bisphenol A polycarbonate absolute molecular weight standard. In certain aspects, the 6% weight siloxane polysiloxane-polycarbonate copolymer can have a melt volume flow rate (MVR) of about 10 cm3/ 10 min at 300 °C /1.2 kg (see C9030T, a 6 % by weight polysiloxane content copolymer available from SABIC Innovative Plastics as "transparent" EXL C9030T resin polymer). In another example, the polysiloxane-polycarbonate block can comprise 20 % by weight polysiloxane based upon the total weight of the polysiloxane-polycarbonate block copolymer. For example, an appropriate polysiloxane-polycarbonate copolymer can be a bisphenol A polysiloxane-polycarbonate copolymer endcapped with para-cumyl phenol (PCP) and having a 20 % polysiloxane content (see C9030P, commercially available from SABIC as the "opaque" EXL C9030P). In various aspects, the weight average molecular weight of the 20 % polysiloxane block copolymer can be about 29,900 Daltons to about 31,000 Daltons when tested according to a polycarbonate standard using gel permeation chromatography (GPC) on a cross-linked styrene-divinylbenzene column and calibrated to polycarbonate references using a UV-VIS detector set at 264 nm on 1 mg/ml samples eluted at a flow rate of about 1.0 ml/minute. Moreover, the 20% polysiloxane block copolymer can have a melt volume rate (MVR) at 300 °C/1.2 kg of 7 cm³/ 10 min and can exhibit siloxane domains sized in a range of from about 5 micron to about 20 micrometers (microns, µm).

As noted herein, the polymer base resin can comprise a number of thermoplastic resins, or a combination thereof. In one example, the polymer base resin can comprise a polycarbonate copolymer comprising units derived from BPA, or a mixture of one or more polycarbonate copolymers comprising units derived from BPA. In a specific example, the polymer base resin can comprise a polycarbonate copolymer having units derived from BPA and a poly(aliphatic ester)-polycarbonate copolymer derived from sebacic acid.

In further examples, a polycarbonate of the polymer base resin can comprise a branched polycarbonate. An exemplary branching agent can include, but is not limited to 1,1,1-tris(4-hydroxyphenyl)ethane (THPE). As a further example, the branched polycarbonate resin may be endcapped with an appropriate end-capping agent, such as for example, p-cyanolphenol (known as HBN).

Certain aspects of the composition include from about 5 wt. % to about 99 wt. % of a polymer base resin, or from about 40 wt. % to about 99 wt. % of a polymer base resin, or from about 55 wt. % to about 99 wt. % of a polymer base resin, or from about 60 wt. % to about 99 wt. % of a polymer base resin, or from about 70 wt. % to about 99 wt. % of a polymer base resin, or from about 40 wt. % to about 95 wt. % of a polymer base resin, or from about 55 wt. % to about 95 wt. % of a polymer base resin, or from about 60 wt. % to about 95 wt. % of a polymer base resin, or from about 75 wt. % to about 95 wt. % of a polymer base resin.

### Carbon-based Filler

In various aspects, the polymer composition comprises a carbon-based filler. Generally, carbon-based fillers may comprise carbon fibers, carbon powder, graphite, graphene, carbon platelets, or carbon nanotubes. Carbon-based filler may further refer to a particulate carbonaceous material, such as, for example, a furnace carbon black, a thermal black, a surface modified carbon black, a heat-treated carbon black, an activated carbon, a graphite, carbon fibers, carbon nanotubes or a combination thereof. According to certain aspects of the present disclosure, the carbon-based filler comprises carbon powder. Moreover, the carbon-based filler may comprise a carbon powder and may be free of or substantially free of carbon nanotubes, carbon platelets, or carbon fibers.

In one example, the carbon-based filler is carbon black. Carbon black may refer to an amorphous form of carbon with a high surface-area-to-volume ratio. Further, carbon black may include a chemisorbed oxygen complex (such as, carboxylic, quinonic, lactonic, phenolic groups and the like) on its surface to varying degrees, depending on the conditions of manufacture. Carbon black properties such as particle size, structure, and purity may vary depending on the type of carbon black chosen. In one aspect, carbon black can disperse well within the polymer phase, maintain the integrity of its structure or network, and have a consistent particle size.

The conductivity of the polymer-carbon black composite may be measured using the surface resistivity (SR) of the conductive film. In one aspect, the conductivity can depend upon the polymer phase, the type of conductive carbon black, the loading of the conductive carbon black, and the dispersion of the conductive carbon black. The conductive carbon black may be furnace black or acetylene black or an extra conductive carbon black. Conductive carbon black such as furnace black or acetylene black has a high-volume resistivity within a range of from 1 to 10² Qcm. Such a carbon black may exhibit a BET (Brunauer, Emmett and Teller) surface area of about at least 50 meters squared per gram (m²/g). In another aspect, the carbon black powder exhibits an oil absorption from about at least 100 milliliters (ml)/100 gram (g). In a specific aspect, the conductive filler comprises an ENSACO™ 250 carbon powder, available from Earache Europe, which has a high to very high void volume allowing the retention of a carbon network at low to very low filler content.

In some aspects, the polymer composition may comprise carbon-based filler having at least one dimension of a particular size. The carbon-based filler may comprise a powder having a particular particle size distribution. For example, the carbon-based filler may have at least one dimension that is less than 100 nm.

In some aspects, the carbon-based filler may have a particular diameter. The polymer composition of claim 1, wherein the carbon-based filler may comprise a powder or has a diameter of less than 30 microns. In further examples, the carbon-based filler has a diameter of less than 10 microns.

In some aspects, the composition can comprise from about 0.01 wt. % to about 50 wt. % of a carbon-based filler based on the total weight of the polymer composition. In further aspects the composition may include from about 0.01 wt. % to about 5 wt. %, or from about 0.01 wt. % to about 3 wt. %, or from about 0.1 wt. % to about 3 wt. %, or from about 0.01 wt. % to about 2.5 wt. %, or from about 0.5 wt. % to about 3 wt. % of a carbon-based filler, or from about 1 wt. % to about 3 wt. % of a carbon-based filler or from about 0.5 wt. % to about 2.5 wt. % of a carbon based filler.

### Additives

The disclosed thermoplastic composition can comprise one or more additives conventionally used in the manufacture of molded thermoplastic parts with the proviso that the optional additives do not adversely affect the desired properties of the resulting composition. Mixtures of optional additives can also be used. Such additives can be mixed at a suitable time during the mixing of the components for forming the composite mixture. Exemplary additives can include ultraviolet agents, ultraviolet stabilizers, heat stabilizers, antistatic agents, anti-microbial agents, anti-drip agents, radiation stabilizers, pigments, dyes, fibers, fillers, plasticizers, fibers, flame retardants, antioxidants, lubricants, wood, glass, and metals, and combinations thereof.

According to certain aspects, the polymer compositions may maintain mechanical performance and dielectric strength even with high levels of fillers (for example, greater than 30 wt. % filler based on the total weight of the polymer composition).

The thermoplastic composition disclosed herein can comprise one or more additional fillers. The filler can be selected to impart additional impact strength and/or provide additional characteristics that can be based on the final selected characteristics of the polymer composition. In some aspects, the filler(s) can comprise inorganic materials which can include clay, titanium oxide, asbestos fibers, silicates and silica powders, boron powders, calcium carbonates, talc, kaolin, sulfides, barium compounds, metals and metal oxides, wollastonite, glass spheres, glass fibers, flaked fillers, fibrous fillers, natural fillers and reinforcements, and reinforcing organic fibrous fillers.

Appropriate fillers or reinforcing agents can include, for example, mica, clay, feldspar, quartz, quartzite, perlite, tripoli, diatomaceous earth, aluminum silicate (mullite), synthetic calcium silicate, fused silica, fumed silica, sand, boron-nitride powder, boron-silicate powder, calcium sulfate, calcium carbonates (such as chalk, limestone, marble, and synthetic precipitated calcium carbonates) talc (including fibrous, modular, needle shaped, and lamellar talc), wollastonite, hollow or solid glass spheres, silicate spheres, cenospheres, aluminosilicate or (armospheres), kaolin, whiskers of silicon carbide, alumina, boron carbide, iron, nickel, or copper, continuous and chopped carbon fibers or glass fibers, molybdenum sulfide, zinc sulfide, barium titanate, barium ferrite, barium sulfate, heavy spar, titanium dioxide, aluminum oxide, magnesium oxide, particulate or fibrous aluminum, bronze, zinc, copper, or nickel, glass flakes, flaked silicon carbide, flaked aluminum diboride, flaked aluminum, steel flakes, natural fillers such as wood flour, fibrous cellulose, cotton, sisal, jute, starch , lignin, ground nut shells, or rice grain husks, reinforcing organic fibrous fillers such as poly(ether ketone), polyimide, polybenzoxazole, poly(phenylene sulfide), polyesters, polyethylene, aromatic polyamides, aromatic polyimides, polyetherimides, polytetrafluoroethylene, and poly(vinyl alcohol), as well combinations comprising at least one of the foregoing fillers or reinforcing agents. The fillers and reinforcing agents can be coated or surface treated, with silanes for example, to improve adhesion and dispersion with the polymer matrix. Fillers generally can be used in amounts of 1 to 200 parts by weight, based on 100 parts by weight of based on 100 parts by weight of the total composition.

In some aspects, the thermoplastic composition may comprise a synergist. In various examples fillers may serve as flame retardant synergists. The synergist facilitates an improvement in the flame retardant properties when added to the flame retardant composition over a comparative composition that contains all of the same ingredients in the same quantities except for the synergist. Examples of mineral fillers that may serve as synergists are mica, talc, calcium carbonate, dolomite, wollastonite, barium sulfate, silica, kaolin, feldspar, barytes, or the like, or a combination comprising at least one of the foregoing mineral fillers. Metal synergists, e.g., antimony oxide, can also be used with the flame retardant. In one example, the synergist may comprise magnesium hydroxide and phosphoric acid. The mineral filler may have an average particle size of about 0.1 to about 20 micrometers, specifically about 0.5 to about 10 micrometers, and more specifically about 1 to about 3 micrometers.

The thermoplastic composition can comprise an antioxidant. The antioxidants can include either a primary or a secondary antioxidant. For example, antioxidants can include organophosphites such as tris(nonyl phenyl)phosphite, tris(2,4-di-t-butylphenyl)phosphite, bis(2,4-di-t-butylphenyl)pentaerythritol diphosphite, distearyl pentaerythritol diphosphite or the like; alkylated monophenols or polyphenols; alkylated reaction products of polyphenols with dienes, such as tetrakis[methylene(3,5-di-tert-butyl-4-hydroxyhydrocinnamate)] methane, or the like; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate or the like; amides of beta-(3,5-di-tert-butyl-4-hydroxyphenyl)-propionic acid or the like, or combinations including at least one of the foregoing antioxidants. Antioxidants can generally be used in amounts of from 0.01 to 0.5 parts by weight, based on 100 parts by weight of the total composition, excluding any filler.

In various aspects, the thermoplastic composition can comprise a mold release agent. Exemplary mold releasing agents can include for example, metal stearate, stearyl stearate, pentaerythritol tetrastearate, beeswax, montan wax, paraffin wax, or the like, or combinations including at least one of the foregoing mold release agents. Mold releasing agents are generally used in amounts of from about 0.1 to about 1.0 parts by weight, based on 100 parts by weight of the total composition, excluding any filler.

In an aspect, the thermoplastic composition can comprise a heat stabilizer. As an example, heat stabilizers can include, for example, organo phosphites such as triphenyl phosphite, tris-(2,6-dimethylphenyl)phosphite, tris-(mixed mono-and dinonylphenyl)phosphite or the like; phosphonates such as dimethylbenzene phosphonate or the like, phosphates such as trimethyl phosphate, or the like, or combinations including at least one of the foregoing heat stabilizers. Heat stabilizers can generally be used in amounts of from 0.01 to 0.5 parts by weight based on 100 parts by weight of the total composition, excluding any filler.

In further aspects, light stabilizers can be present in the thermoplastic composition. Exemplary light stabilizers can include, for example, benzotriazoles such as 2-(2-hydroxy-5-methylphenyl)benzotriazole, 2-(2-hydroxy-5-tert-octylphenyl)-benzotriazole and 2-hydroxy-4-n-octoxy benzophenone or the like or combinations including at least one of the foregoing light stabilizers. Light stabilizers can generally be used in amounts of from about 0.1 to about 1.0 parts by weight, based on 100 parts by weight of the total composition, excluding any filler.

The thermoplastic composition can also comprise plasticizers. For example, plasticizers can include phthalic acid esters such as dioctyl-4,5-epoxy-hexahydrophthalate, tris-(octoxycarbonylethyl) isocyanurate, tristearin, epoxidized soybean oil or the like, or combinations including at least one of the foregoing plasticizers. Plasticizers are generally used in amounts of from about 0.5 to about 3.0 parts by weight, based on 100 parts by weight of the total composition, excluding any filler.

Ultraviolet (UV) absorbers can also be present in the disclosed thermoplastic composition. Exemplary ultraviolet absorbers can include for example, hydroxybenzophenones; hydroxybenzotriazoles; hydroxybenzotriazines; cyanoacrylates; oxanilides; benzoxazinones; 2-(2H-benzotiiazol-2-yl)-4-(1,1,3,3-tetramethylbutyl)-phenol (CYASORB™ 5411); 2-hydroxy-4-n-octyloxybenzophenone (CYASORB™ 531); 2-[4,6-bis(2,4-dimethylphenyl)-1,3,5-triazin-2-yl]-5-(octyloxy)-phenol (CYASORB™ 1164); 2,2'-(1,4- phenylene)bis(4H-3,1-benzoxazin-4-one) (CYASORB™ UV- 3638); 1,3-bis[(2-cyano-3,3-diphenylacryloyl)oxy]-2,2-bis[[(2-cyano-3, 3-diphenylacryloyl)oxy]methyl]propane (UVINUL™ 3030); 2,2'-(1,4-phenylene) bis(4H-3,1-benzoxazin-4-one); 1,3-bis[(2-cyano-3,3-diphenylacryloyl)oxy] -2,2-bis[[(2-cyano-3,3-diphenylacryloyl)oxy]methyl]propane; nano-size inorganic materials such as titanium oxide, cerium oxide, and zinc oxide, all with particle size less than 100 nanometers; or the like, or combinations including at least one of the foregoing UV absorbers. UV absorbers are generally used in amounts of from 0.01 to 3.0 parts by weight, based on 100 parts by weight of the total composition, excluding any filler.

The thermoplastic composition can further comprise a lubricant. As an example, lubricants can include for example, fatty acid esters such as alkyl stearyl esters, e.g., methyl stearate or the like; mixtures of methyl stearate and hydrophilic and hydrophobic surfactants including polyethylene glycol polymers, polypropylene glycol polymers, and copolymers thereof e.g., methyl stearate and polyethylene-polypropylene glycol copolymers in a suitable solvent; or combinations including at least one of the foregoing lubricants. Lubricants can generally be used in amounts of from about 0.1 to about 5 parts by weight, based on 100 parts by weight of the total composition, excluding any filler.

Anti-drip agents can also be used in the composition, for example a fibril forming or non-fibril forming fluoropolymer such as polytetrafluoroethylene (PTFE). The anti-drip agent can be encapsulated by a rigid copolymer, for example styrene-acrylonitrile copolymer (SAN). PTFE encapsulated in SAN is known as TSAN. In one example, TSAN can comprise 50 wt. % PTFE and 50 wt. % SAN, based on the total weight of the encapsulated fluoropolymer. The SAN can comprise, for example, 75 wt. % styrene and 25 wt. % acrylonitrile based on the total weight of the copolymer. An antidrip agent, such as TSAN, can be used in amounts of 0.1 to 10 parts by weight, based on 100 parts by weight of the total composition, excluding any filler.

As an example, the disclosed composition can comprise an impact modifier. The impact modifier can be a chemically reactive impact modifier. By definition, a chemically reactive impact modifier can have at least one reactive group such that when the impact modifier is added to a polymer composition, the impact properties of the composition (expressed in the values of the IZOD impact) are improved. In some examples, the chemically reactive impact modifier can be an ethylene copolymer with reactive functional groups selected from, but not limited to, anhydride, carboxyl, hydroxyl, and epoxy.

In further aspects of the present disclosure, the composition can comprise a rubbery impact modifier. The rubber impact modifier can be a polymeric material which, at room temperature, is capable of recovering substantially in shape and size after removal of a force. However, the rubbery impact modifier should typically have a glass transition temperature of less than 0° C. In certain aspects, the glass transition temperature (Tg) can be less than -5° C, -10° C, -15° C, with a Tg of less than -30° C typically providing better performance. Representative rubbery impact modifiers can include, for example, functionalized polyolefin ethylene-acrylate terpolymers, such as ethylene-acrylic estersmaleic anhydride (MAH) or glycidyl methacrylate (GMA). The functionalized rubbery polymer can optionally contain repeat units in its backbone which are derived from an anhydride group containing monomer, such as maleic anhydride. In another scenario, the functionalized rubbery polymer can contain anhydride moieties which are grafted onto the polymer in a post polymerization step.

### Properties and Articles

In certain aspects, the disclosed composites may exhibit microwave absorption and shielding properties. A molding article or plaque comprising the composite may exhibit a dielectric constant between 5 and 35 and a dissipation loss between 0.1 and 5. The dissipation factor Df (tan delta, ε"/ε') may be between 0.003 and 1 at frequencies of about 2 to about 30 GHz.

Plaques molded from the disclosed composite may exhibit certain microwave absorption properties. For example, molded plaques at a thickness of about 0.125 inches (0.3125 cm) may absorb at least about 60 % of incident microwave radiation corresponding to - 4 decibel (dB) of reflection loss at frequencies between 2 and 30 GHz, with an absorption bandwidth at - 10 dB (corresponding to 90% absorption efficiency) of at least 0.5 GHz. Such performance may be apparent for molded plaques at thicknesses between 1 mm and 5 mm. Plaques molded from the disclosed composite may exhibit certain attenuation properties. As carbon increased, attenuation increased. As the amount of siloxane increased (for the same amount of carbon), attenuation increased (more negative values, indicating a loss of energy, i.e., attenuating energy within the material. For example, attenuation values of from at least -5 dB/cm to about -30 dB/cm in the K band and -10 dB/cm to about -90 dB/cm in the W band were observed. These siloxane containing composites exhibited greater attenuation than their counterparts without siloxane at the same carbon content and frequency. Plaques molded from the disclosed composite may exhibit certain shielding properties. Total shielding may improve as the amount of carbon black increases. Moreover, siloxane may further improve total shielding at the same carbon black content and frequency when compared to their counterparts without siloxane. For example, shielding effectiveness values of at least from 2 dB to about 15 dB in the K-band and at least from 5 dB to 30 dB in the W-band were observed. These values demonstrate that surprisingly, the polysiloxane aids carbon black in trapping more radiation than in the absence of polysiloxane.

In various aspects, the present disclosure relates to articles comprising the compositions herein. The compositions can be molded into useful shaped articles by a variety of means such as injection molding, extrusion, rotational molding, blow molding and thermoforming to form articles. The compositions can be useful in the manufacture of articles requiring materials with good flow, good impact strength, and good dielectric strength. In various aspects, the compositions may be useful for as well as electrically conducting purposes.

The advantageous characteristics of the compositions disclosed herein can make them appropriate for an array of uses.

### Methods for Making the Composite

Aspects of the disclosure further relate to methods for making a composite including a thermoplastic polymer component. In many aspects, the compositions can be prepared according to a variety of methods. The compositions of the present disclosure can be blended, compounded, or otherwise combined with the aforementioned ingredients by a variety of methods involving intimate admixing of the materials with any additional additives desired in the formulation. Because of the availability of melt blending equipment in commercial polymer processing facilities, melt processing methods can be used. In various further aspects, the equipment used in such melt processing methods can include, but is not limited to, co-rotating and counter-rotating extruders, single screw extruders, co-kneaders, disc-pack processors and various other types of extrusion equipment. In a further aspect, the extruder is a twin-screw extruder. In various further aspects, the composition can be processed in an extruder at temperatures from about 180 °C to about 350 °C, particularly 250 °C to 300 °C.

Methods may further comprise processing the composite to a provide a plaque of a desired thickness. Plaques can be extruded, injection molded, compression molded or injection-compression molded, and may have a thickness between about 0.5 mm and 6 mm. Other processes could also be applied to the thin thermoplastic film, including but not limited to lamination, co-extrusion, thermo-forming or hot pressing. In such aspects, further layers of other materials (for example, other thermoplastic polymer layers, metallic layers, etc.) could be combined with the composite.

Various combinations of elements of this disclosure are encompassed by this disclosure, e.g., combinations of elements from dependent claims that depend upon the same independent claim.

### Definitions

It is also to be understood that the terminology used herein is for the purpose of describing particular aspects only and is not intended to be limiting. As used in the specification and in the claims, the term "comprising" can include the embodiments "consisting of' and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a thermoplastic polymer component" includes mixtures of two or more thermoplastic polymer components. As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

As used herein, the terms "optional" or "optionally" means that the subsequently described event or circumstance can or cannot occur, and that the description includes instances where said event or circumstance occurs and instances where it does not. For example, the phrase "optional additional processes" means that the additional processes can or cannot be included and that the description includes methods that both include and that do not include the additional processes.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein, "polycarbonate" refers to an oligomer or polymer comprising residues of one or more dihydroxy compounds, e.g., dihydroxy aromatic compounds, joined by carbonate linkages; it also encompasses homopolycarbonates, copolycarbonates, and (co)polyester carbonates.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation is 100.

Unless otherwise stated to the contrary herein, all test standards are the most recent standard in effect at the time of filing this application.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

### Aspects of the Disclosure

In various aspects, the present disclosure pertains to and includes at least the following aspects.
Aspect 1. A composite comprising: from about 50 wt. % to about 90 wt. % of a thermoplastic resin, wherein the thermoplastic resin comprises a polycarbonate polysiloxane copolymer; and from about 10 wt. % to about 50 wt. % of a carbon-based filler, wherein the composite exhibits a dielectric constant ε' of between 5 and 20 and a dissipation loss ε" of between 0.1 and 6, measured at frequencies between about 10 and 120 GHz and wherein the combined weight percent value of all components does not exceed 100 wt. %, and all weight percent values are based on the total weight of the composite.
Aspect 2. The composite according to aspect 1, wherein the composite has a dissipation factor (Df) of from about 0.003 to about 1 when determined as a ratio of ε" and ε' measured in transmission mode.
Aspect 3. The composite according to aspect 1 or 2, wherein a 3.175 mm thick molded plaque comprising the composite absorbs at least 20% of incident microwave radiation at frequencies from 15 GHz to 30 GHz and at least 50% of incident microwave radiation at frequencies from 70 GHz to 120 GHz.
Aspect 4. The composite of aspect 1, wherein a ratio of thermoplastic resin to carbon-based filler is from about 9 to about 1, such that a surface (volume) electrical resistivity of the composite is greater than 100 Ohm/square (1,000 Ohm.cm).
Aspect 5. The composite of aspect 1, wherein the thermoplastic resin comprises a semi-crystalline resin or an amorphous resin.
Aspect 6. The composite of aspect 1, wherein the composite comprises from about 10 wt. % to about 50 wt. % of a carbon-based filler.
Aspect 7. The composite of aspect 1, wherein the thermoplastic resin comprises a polycarbonate, a polyetherimide, a polyphenylene ether, a polystyrene, a polysulfone, a polyester, a polyamide, copolymers thereof, or a combination thereof.
Aspect 8. The composite of aspect 1, wherein the polycarbonate polysiloxane copolymer is present in an amount of from 10 wt. % to about 40 wt. % based on the total weight of the composite.
Aspect 9. The composite of aspect 1, wherein the polycarbonate polysiloxane copolymer has a siloxane content of from about 5 wt. % to about 50 wt. % based on the total weight of the polycarbonate polysiloxane copolymer.
Aspect 10. The composite of aspect 6, wherein the polycarbonate polysiloxane copolymer has a siloxane content of about 20 wt. %.
Aspect 11. The composite of aspect 1, wherein the composite is suitable for microwave shielding or microwave absorbing applications.
Aspect 12. The composite of aspect 1, wherein a molded plaque comprising the composite exhibits microwave absorption and shielding efficiency.
Aspect 13. The composite of aspect 1, wherein the carbon-based filler comprises carbon fibers, carbon powder, graphite, graphene, carbon platelets, carbon nanotubes, or a combination thereof.
Aspect 14. The composite of aspect 1, wherein the carbon-based filler comprises carbon powder.
Aspect 15. The composite of aspect 1, wherein the carbon-based filler comprises carbon powder and is free of or substantially free of carbon nanotubes, carbon platelets, or carbon fibers.
Aspect 16. The composite of aspect 1, wherein the composite is a component of an automotive radar sensor.
Aspect 17. The composite of aspect 1, wherein the composite is a microwave absorptive device or a component thereof.
Aspect 18. The composite of aspect 1, further comprising an additive material selected from the group consisting of: an antioxidant; a colorant; a de-molding agent; a dye; a flow promoter; a flow modifier; a light stabilizer; a lubricant; a mold release agent; a pigment; a colorant, a quenching agent; a thermal stabilizer; an ultraviolet (UV) absorbant; a UV reflectant; a UV stabilizer; an epoxy chain extender; a flame retardant; and combinations thereof.
Aspect 19. An autoradar sensor for electromagnetic radiation comprising a composite, the composite comprising: from about 50 wt. % to about 90 wt. % of a thermoplastic resin, wherein the thermoplastic resin comprises a polycarbonate polysiloxane copolymer; and from about 10 wt. % to about 50 wt. % of a carbon-based filler, wherein the composite exhibits a dielectric constant ε' of between 5 and 20 and a dissipation loss ε" of between 0.1 and 6, measured at frequencies between about 10 and 120 GHz and wherein the combined weight percent value of all components does not exceed 100 wt. %, and all weight percent values are based on the total weight of the composite.
Aspect 20. The composite of any one of aspects 1-8, wherein a molded plaque comprising the composite exhibits microwave Attenuation of at least about -1 dB/cm in the K-band and at least - 5 dB/cm in the W-band, and a total Shielding Effectiveness of at least about 1 dB in the K-band and at least 5 dB in the W-band when measured according to a Free Space method.

### EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of mixing conditions, e.g., component concentrations, extruder design, feed rates, screw speeds, temperatures, pressures and other mixing ranges and conditions that can be used to optimize the product purity and yield obtained from the described process. Only reasonable and routine experimentation will be required to optimize such process conditions.

### Example I. Dielectric Properties in the K-band

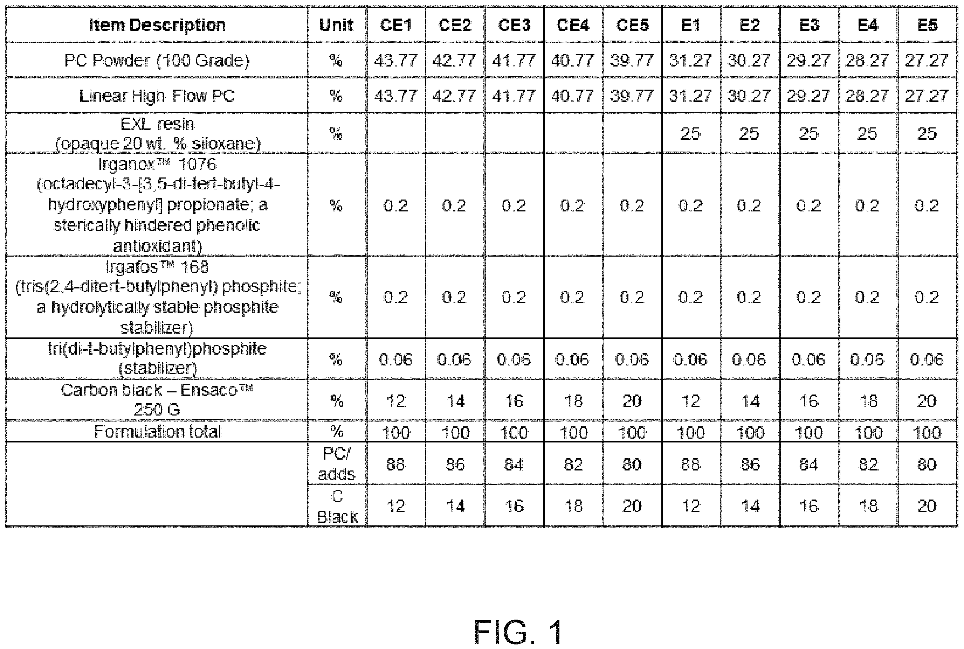

Various composite samples were prepared. The formulations are presented in Table 1 (FIG. 1). Comparative samples included a blend of polycarbonate resins and carbon black and are designated CE1-CE5. Inventive samples combine a blend of polycarbonate resins, carbon black, and a polysiloxane-polycarbonate copolymer. Composite samples were prepared on a 40 mm diameter, co-rotating intermeshing twin-screw extruder, where the ingredients of the different formulations were added to the extruder, melted, mixed and pushed out of the extruder through a six-hole die plate. The extruder was operated at 325 rpm of screw speed, at a rate on 45 lb/hr (0.0225 ton/hr) and at a torque of 50-60% of the maximum torque. The extruder barrel temperature was maintained between about 180-195°C (upstream, extruder's feed throat) and 285-305 °C (downstream, extruder's die plate). The die plate temperature was maintained at between 285-295 °C, and the temperature of the melt exiting the extruder was measured at between 310-320 °C.

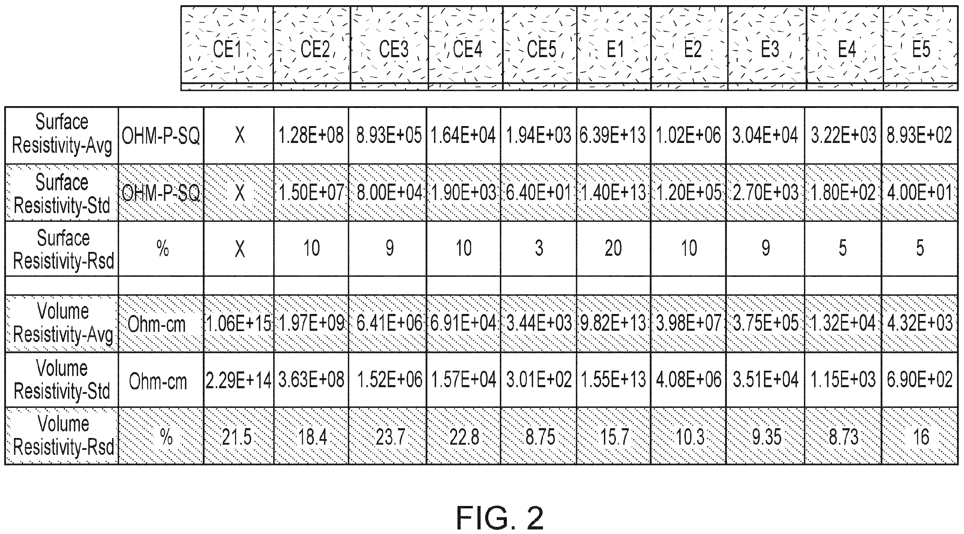

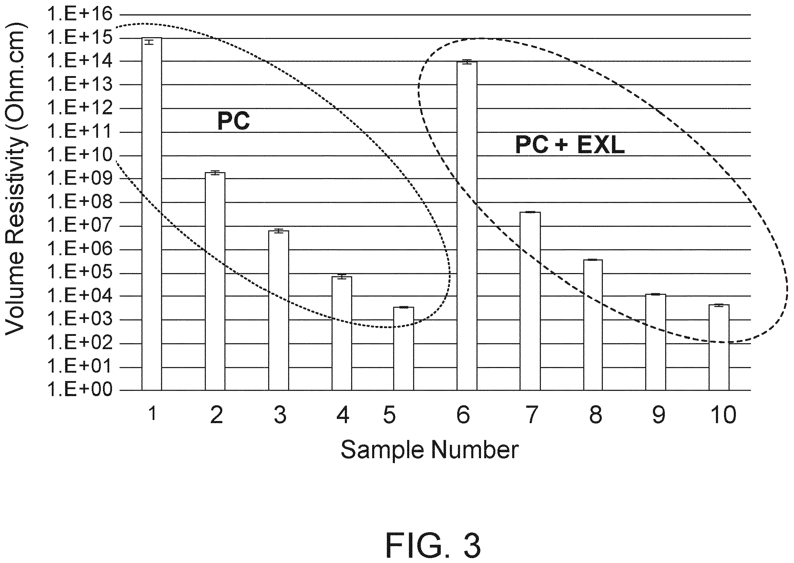

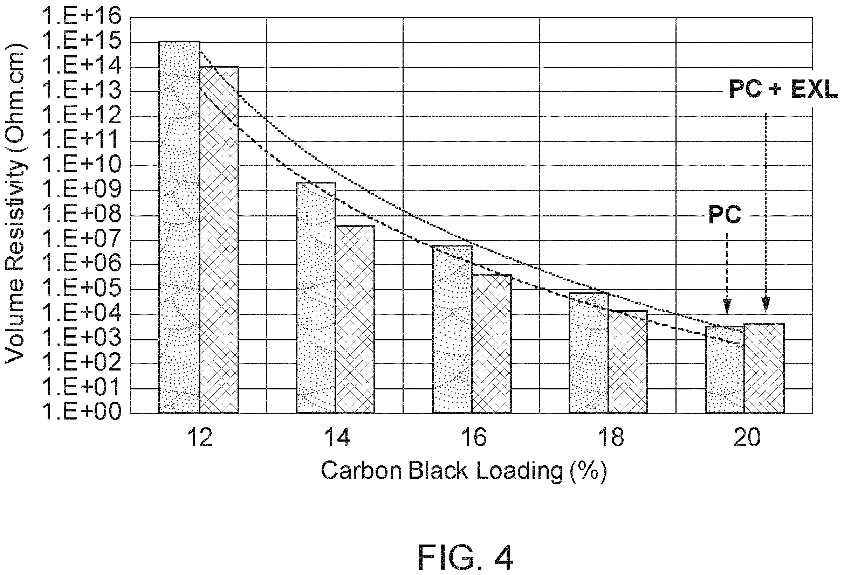

Electrical surface resistivity and volume resistivity were observed for comparative and inventive samples at room temperature, measured according to ASTM D257 on 4 inch by 5 inch and 1/8 inch thick (10.2 cm by 12.7 cm and 0.32 cm thickness) molded plaques, at a range of 10 - 100V of voltage, at 50% relative humidity (RH) and 23 °C ambient conditions. Values are presented in Table 2 (FIG. 2). FIG. 3 shows a graphical representation of the electrical volume resistivities for CE1-5 and E1-5. As shown, the resistivities for the comparative and inventive samples are comparable, with the values for E1-E5 being generally lower, except for CE5 and E5. FIG. 4 shows a graphical representation of the volume resistivity for samples as the carbon black loading is adjusted.

Values for dielectric permittivities (dielectric constant ε' and dissipation loss ε") were also observed according to the Free Space Method. The Free Space Method consists of a Vector Network Analyzer connected to two antennas (a transmitting antenna and a receiving antenna) to focus microwave energy at or through a slab of material. The method can be run in Transmission Mode (all three modes of energy transfer, Transmission, Absorption and Reflection are allowed) or Metal-backed Reflection Mode (only Absorption and Reflection are allowed, with Transmission being suppressed by the use of a metallic plate behind the sample). This method is non-contacting and is especially useful at mm-wave frequencies.

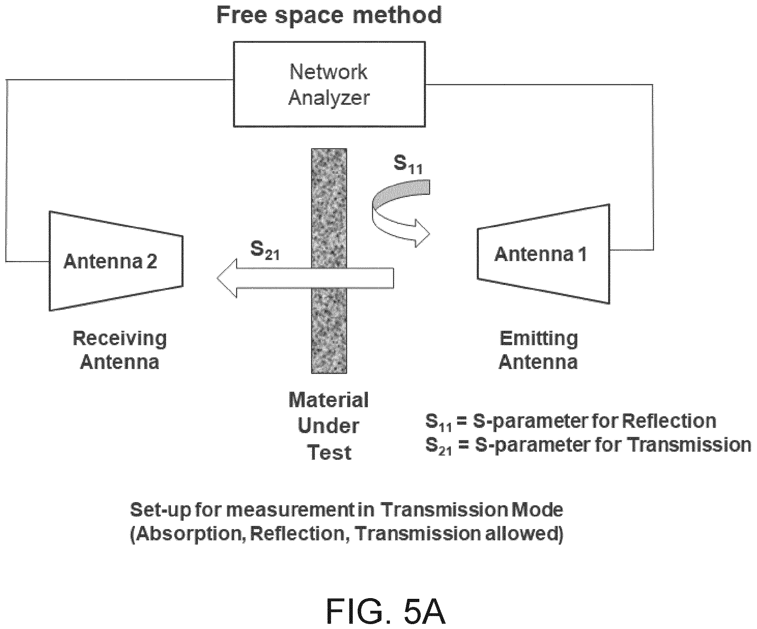

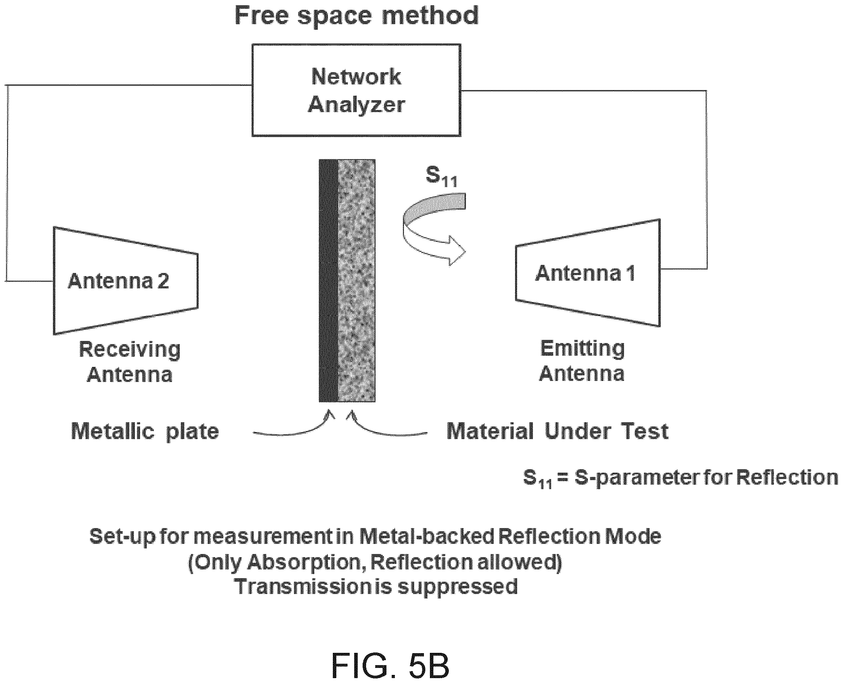

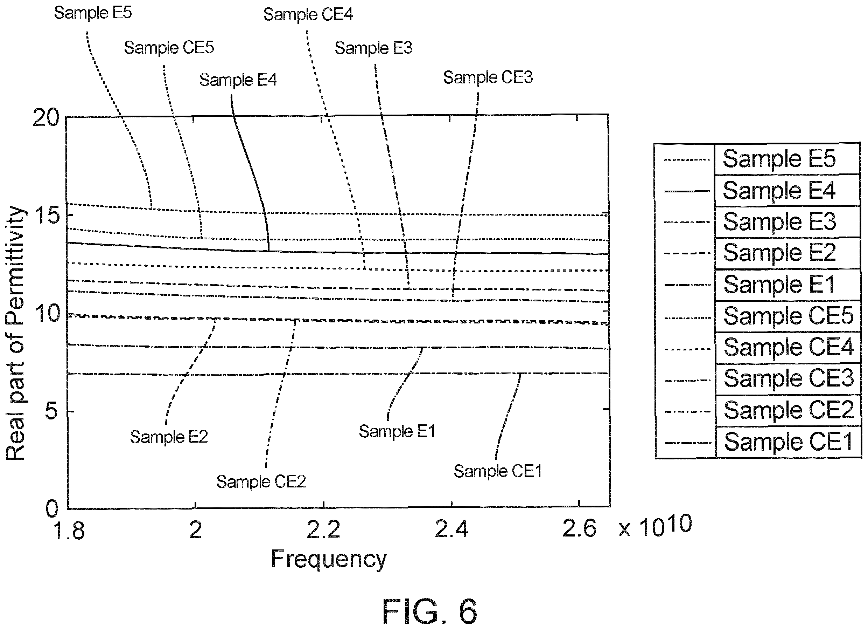

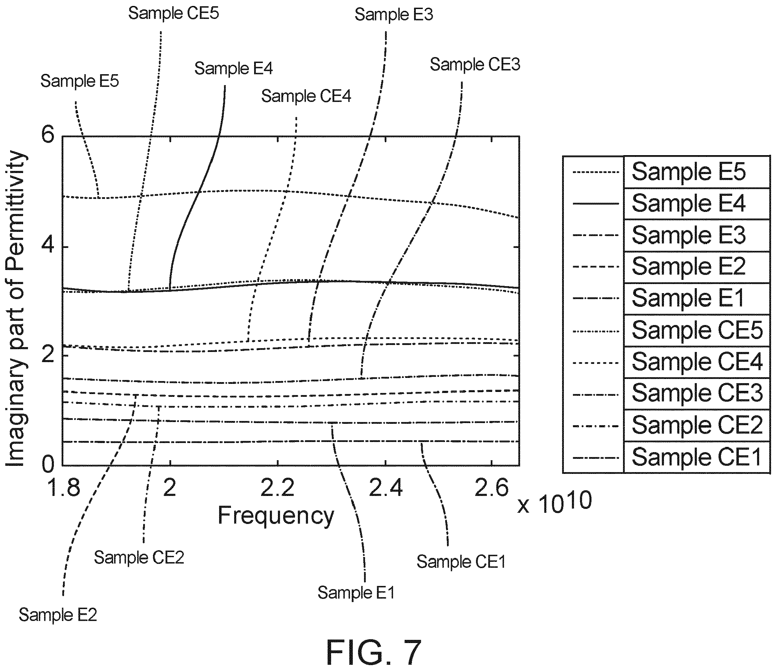

Samples were evaluated in two modes: (a) Transmission mode and (b) Metal-backed reflection mode as presented in FIG. 5. FIG. 6 provides the observed dielectric constant (ε', real part) for CE1-CE5 and E1-E5 at 18 to 26.5 GHz frequency. As evidenced, increasing the amount of carbon black increased the value of the dielectric constant. Surprisingly, where the loading of carbon black is the same, the presence of polysiloxane copolymer also increased the dielectric constant. (Compare CE1 vs. E1, CE2 vs. E2, etc.). FIG. 7 provides a graphical representation of the dielectric loss (ε", imaginary part) for CE1-CE5 and E1-E5. As shown, as the amount of carbon black in the composite increased, the dielectric loss increased. Similarly, where the loading of carbon black is the same, the presence of polysiloxane copolymer also increased the dielectric loss of the material.

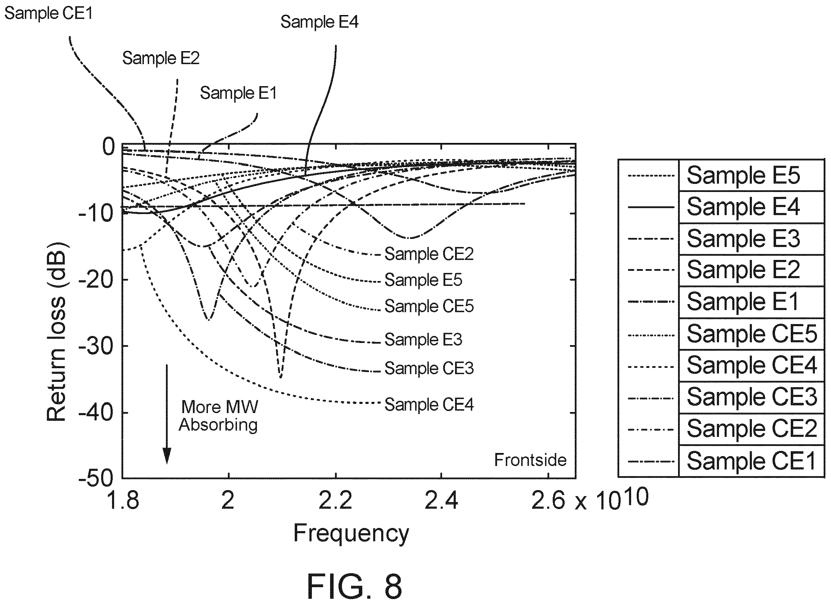

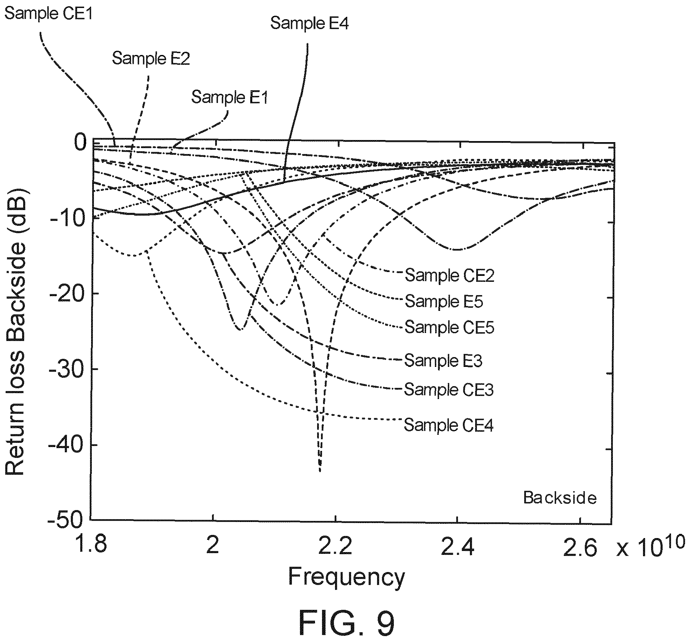

FIG. 8 shows the metal-backed reflection frontside measurements for the Return Loss specified in decibels (dB). The Return Loss (also called Reflection Loss) indicates the proportion of microwaves arriving at the antenna that are rejected (reflected) as compared against those that are accepted. A 0dB of Reflection Loss, for example, would mean that there is no loss of reflection, and 100% of the incident radiation would be reflected back to the emitting antenna. This would be the behavior exhibited by perfect mirrors of microwave radiation (100% reflectors of MW radiation). Metals (stainless steel, aluminum, etc) have values of Reflection Loss that are close to 0dB. Similarly, the more negative the value of the Reflection Loss the more absorbing of MW radiation the material (since Transmission is identically zero in metal-backed reflection mode due to the presence of the metallic plate behind the sample during measurement). As shown, as the amount of carbon black increases (CE1 to CE5 and E1 to E5), the reflection loss (or microwave absorption) increases up to a certain point and then decreases. Also, as the carbon black content increases, the resonance frequency for maximum absorption shifts to lower frequencies. The trend is apparent for both CE1-CE5 free of, and E1-E5 including the polysiloxane-polycarbonate copolymer. FIG. 9 shows the metal-backed reflection backside measurements for the return loss specified in decibels (dB). Similar trends were observed for the backside measurements. As shown, as the amount of carbon black increases (CE1 to CE5 and E1 to E5), the reflection loss (or microwave absorption) increases up to a certain point and then decreases. FIG. 8 (frontside of plaque) and FIG. 9 (backside of plaque) show that these dielectric measurements are consistent front to back and reproducible using the Free Space Method used to characterize the materials of this invention.

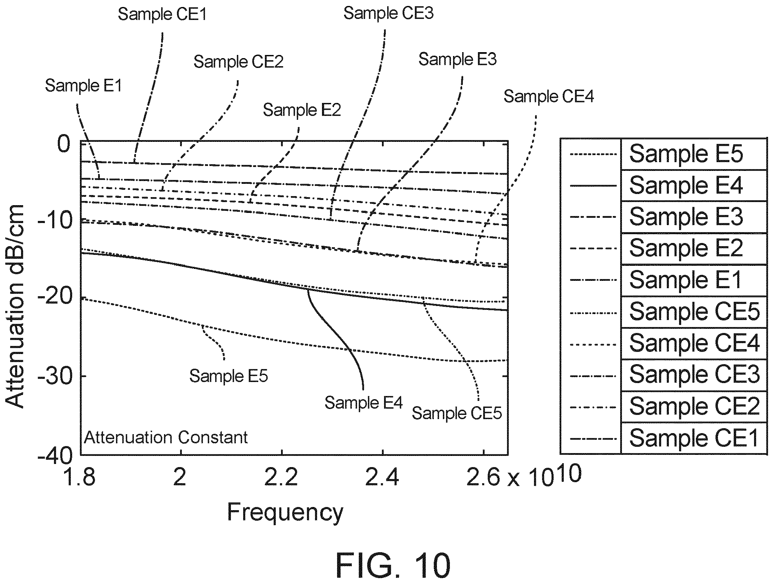

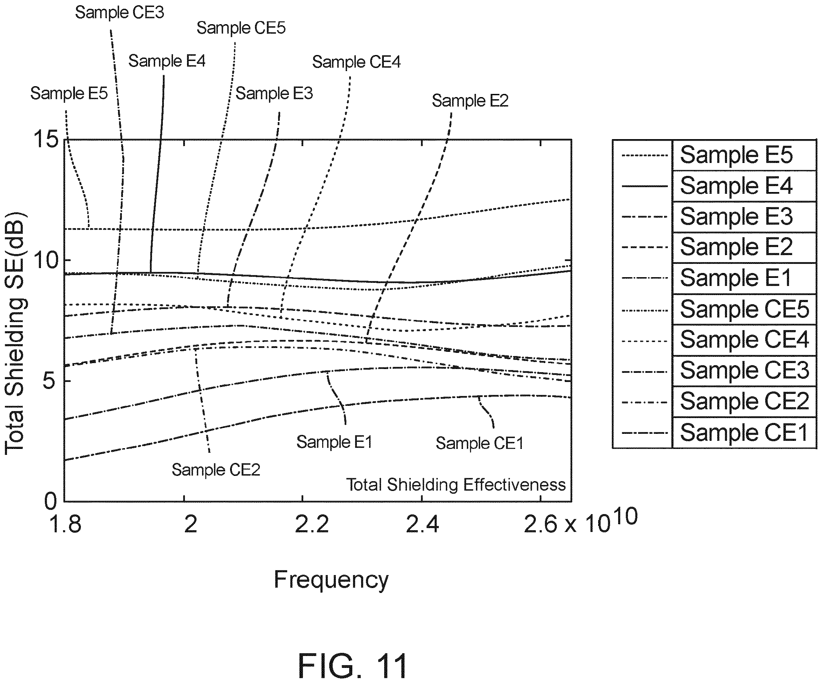

FIG. 10 provides a graphical representation of the Attenuation Constant as decibels per centimeter of sample thickness. With increasing carbon black content, the attenuation properties of the composite samples increased. See CE1 through CE5 and E1 through E5. As carbon increased, attenuation increased. As the amount of siloxane increased (for the same amount of carbon), attenuation increased (more negative values, indicating a loss of energy, i.e., attenuating energy within the material. FIG. 11 provides the total Shielding Effectiveness as decibels. As the carbon black content increased, the shielding effectiveness of the composite also increased. The Shielding Effectiveness describes the combined effect of absorption and reflection of the material. Surprisingly, at the same loading of carbon black, the inventive samples having polysiloxane-polycarbonate copolymer had a higher shielding effectiveness than the corresponding comparative sample without the copolymer.

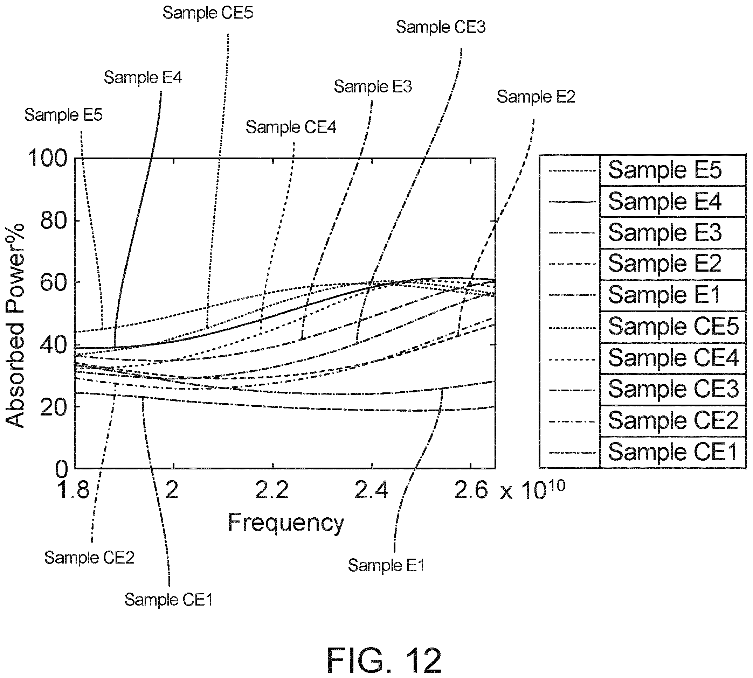

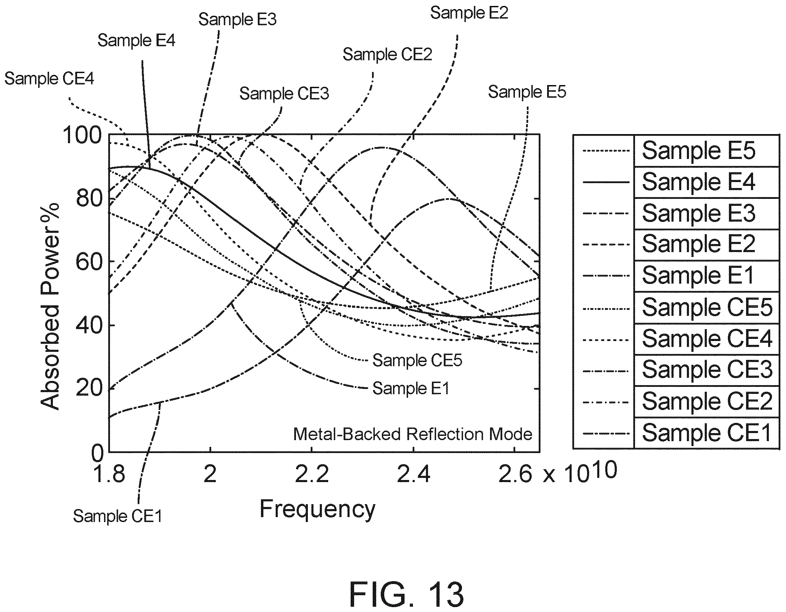

FIG. 12 presents the percentage of power absorbed in transmission mode determined according to the Free Space Method. In transmission mode, as the amount of carbon black increased, the total microwave energy absorbed by the material increased for most of the frequencies investigated. At the same loading of carbon black, the presence of the polysiloxane-polycarbonate copolymer increased the total microwave energy absorbed by the composite, for most of the frequencies observed. FIG. 13 provides these absorption results for metal-backed reflection mode. In Metal-backed reflection mode, as the amount of carbon black increased from CE1-CE5 and E1-E5, the absorbed microwave energy increased up to a certain level, and then decreased.

### Example II. Dielectric Properties in the W-band (75-110 GHz)

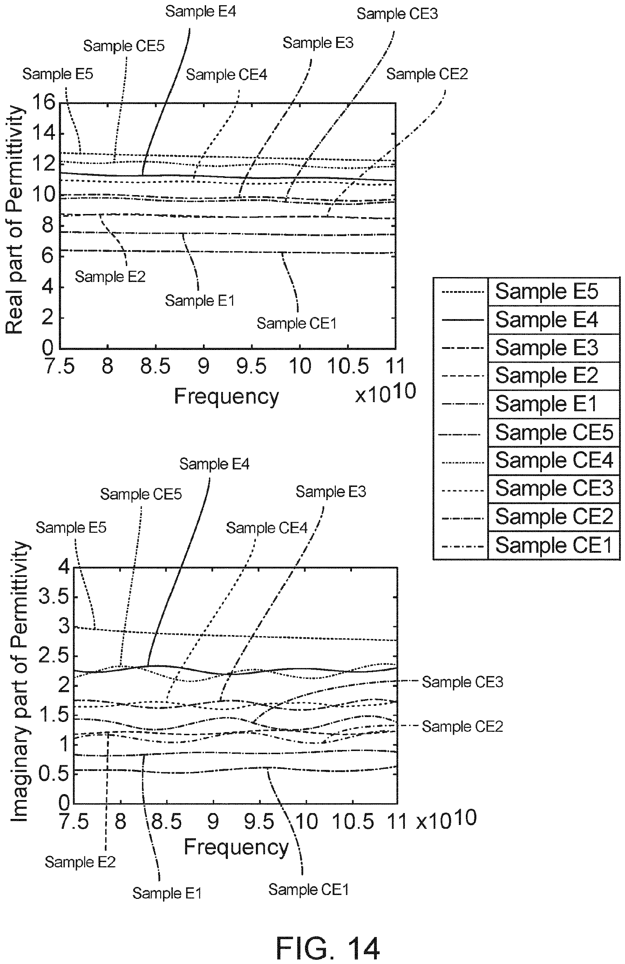

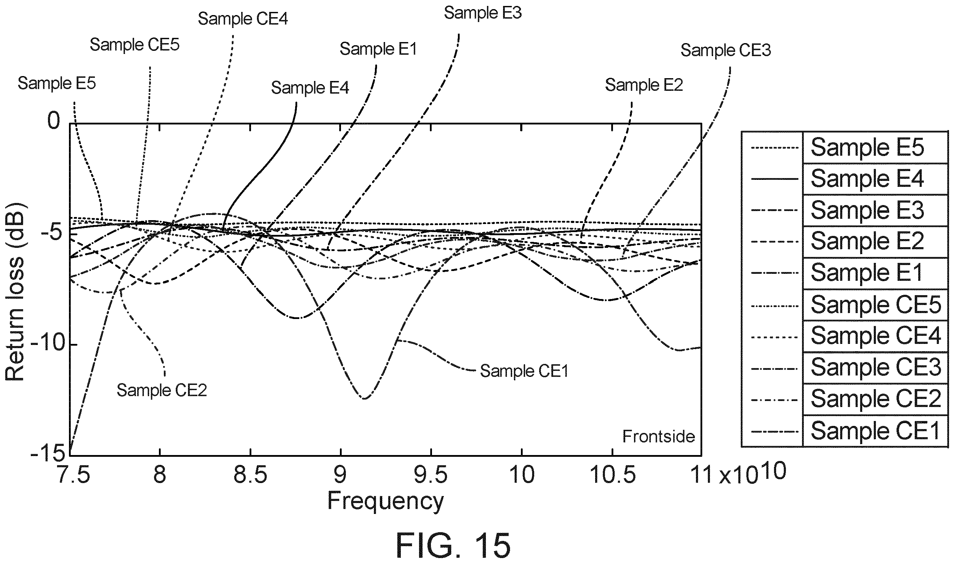

Values for dielectric permittivities (dielectric constant ε' and dissipation loss ε") were also observed according to the Free Space Method. The formulations presented in Table 1 (FIG. 1) were evaluated at 75-110 GHz. Permittivities for real and imaginary parts were observed for the front side of a molded plaque having the dimensions previously indicated and are presented in FIG. 14. FIG. 15 shows the metal-backed reflection frontside measurements for the return loss specified in decibels (dB).

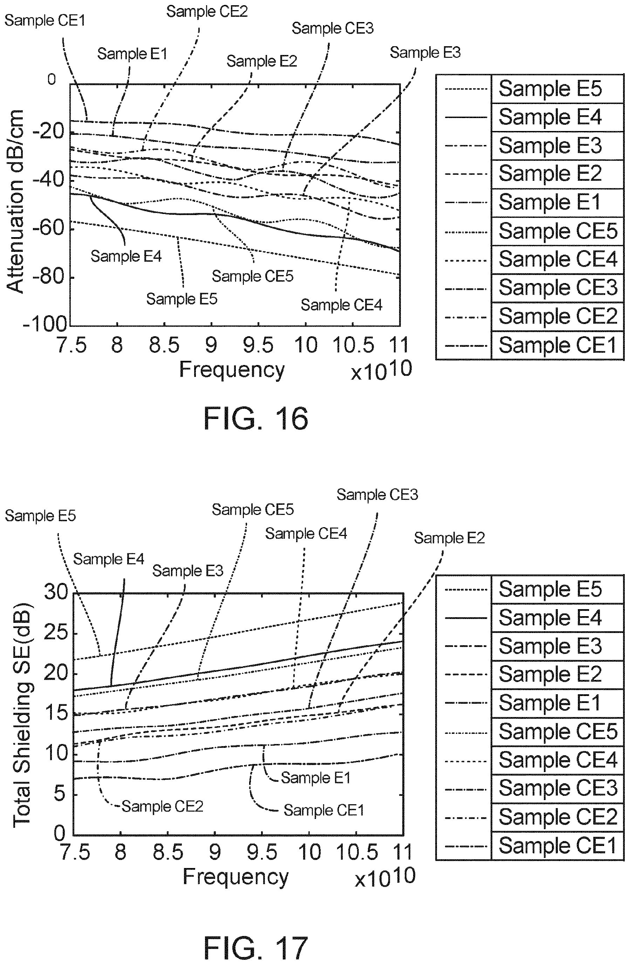

FIGS. 16 and 17 provide graphical representations of the Attenuation Constant and total Shielding Effectiveness, respectively.

Average thickness for molded plaques are presented in Table 3 below.

| | Average Sample Thickness (mm) |
|---|---|
| CE1 | 3.442 |
| CE2 | 3.489 |
| CE3 | 3.381 |
| CE4 | 3.418 |
| CE5 | 3.325 |
| E1 | 3.320 |
| E2 | 3.355 |
| E3 | 3.316 |
| E4 | 3.261 |
| E5 | 3.252 |

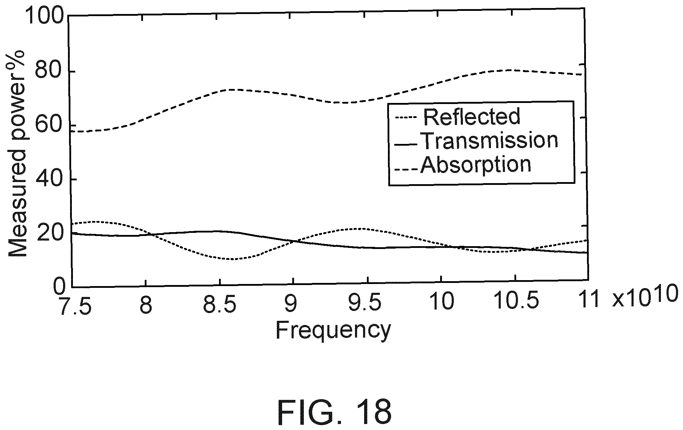

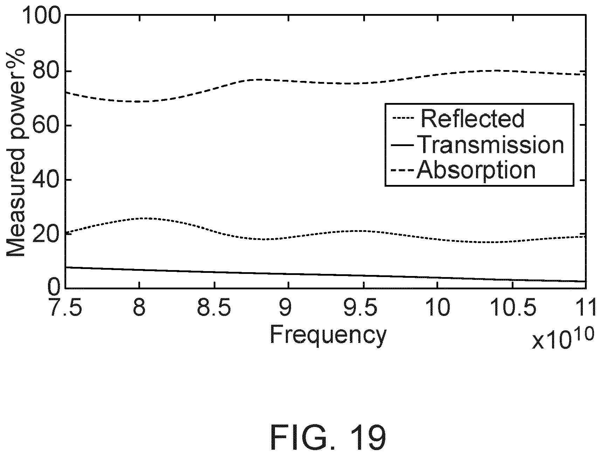

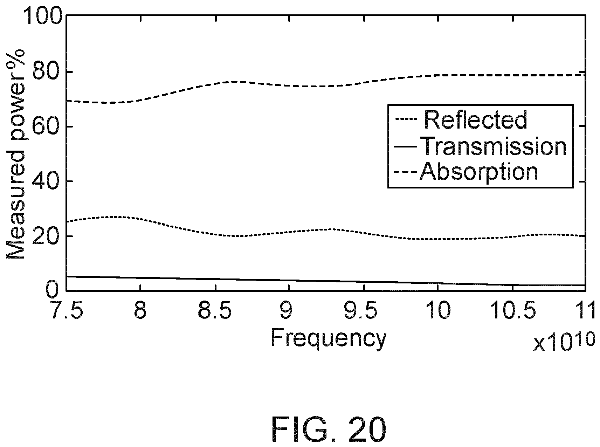

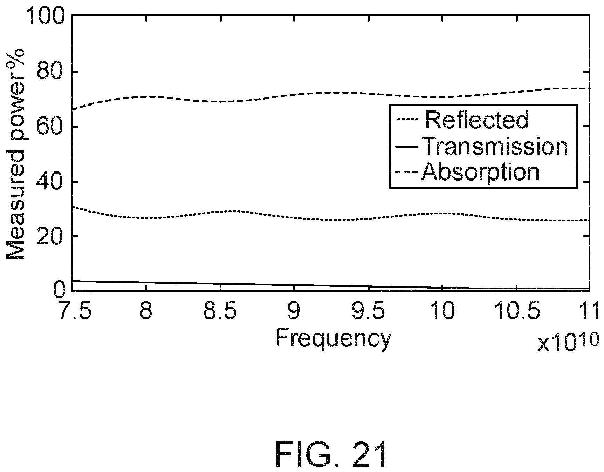

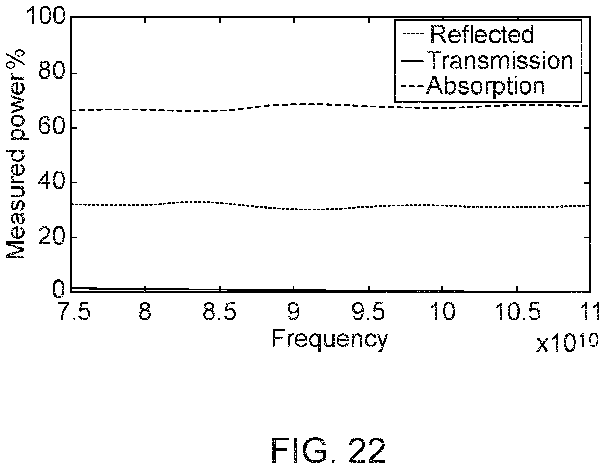

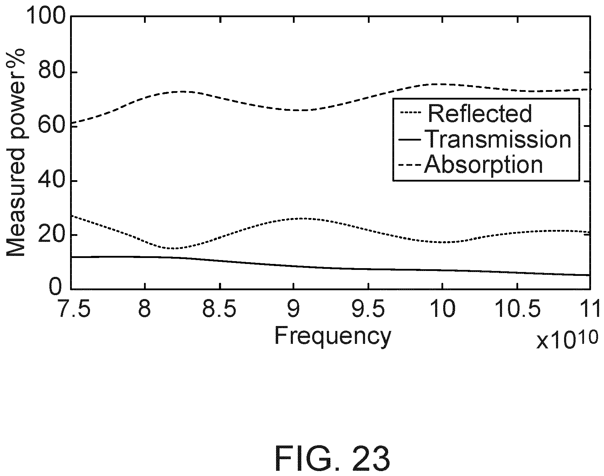

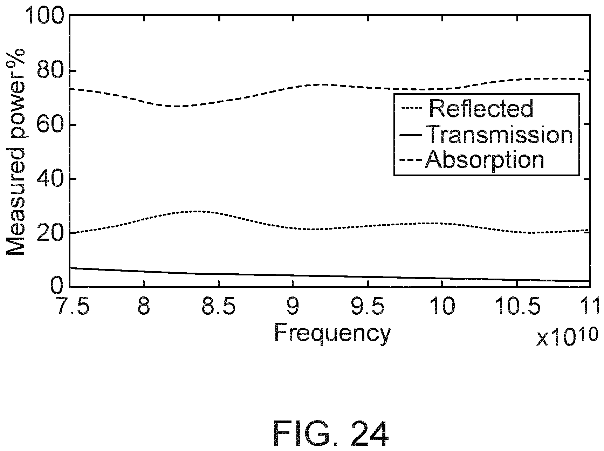

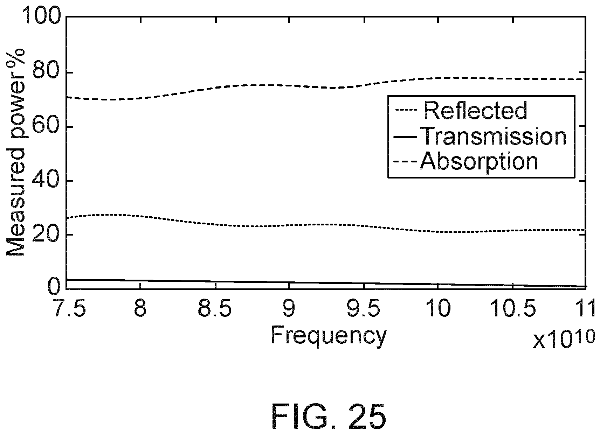

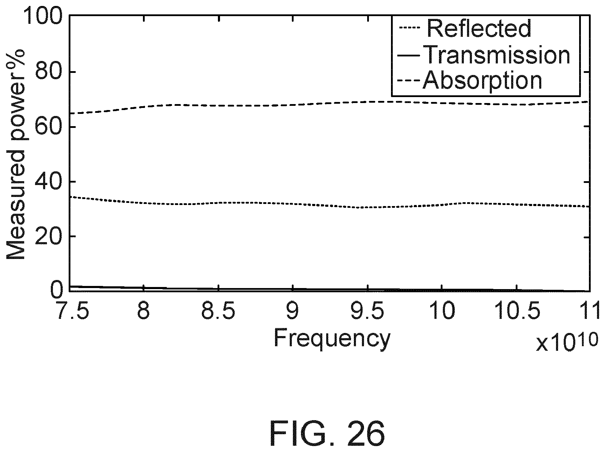

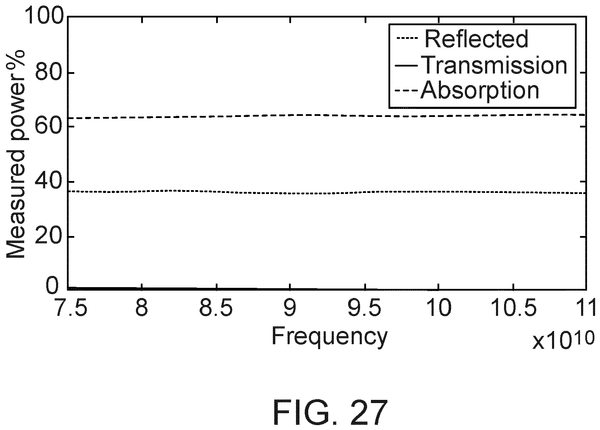

FIG. 18 shows the Percent Power measured in Transmission for sample CE1. FIG. 19 shows the Percent Power measured in Transmission for sample CE2. FIG. 20 shows the Percent Power measured in Transmission for sample CE3. FIG. 21 shows the Percent Power measured in Transmission for sample CE4. FIG. 22 shows the Percent Power measured in Transmission for sample CE5. FIG. 23 shows the Percent Power measured in Transmission for sample E1. FIG. 24 shows the Percent Power measured in Transmission for sample E2. FIG. 25 shows the Percent Power measured in Transmission for sample E3. FIG. 26 shows the Percent Power measured in Transmission for sample E4. FIG. 27 shows the Percent Power measured in Transmission for sample E5.

As carbon loading increases, Absorption increases up to a certain point, and then decreases or stays fairly constant. Reflection slightly increases (from ∼20 to ∼30%) as carbon loading increases. Since the sum of Absorption, Reflection and Transmission at each frequency has to amount to 100% of the incoming MW radiation, Transmission has to decrease as carbon black content increases, which is shown in the graphs (from about 20% transmission in CE1 to about 1-2% in CE5). Similar conclusions can be drawn from E1 through E5.

The above description is intended to be illustrative, and not restrictive. For example, the above-described examples (or one or more aspects thereof) may be used in combination with each other. Other embodiments can be used, such as by one of ordinary skill in the art upon reviewing the above description. The Abstract is provided to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description as examples or embodiments, with each claim standing on its own as a separate embodiment, and it is contemplated that such embodiments can be combined with each other in various combinations or permutations. The scope of the disclosure should be determined with reference to the appended claims, along with the full scope of equivalents to which such claims are entitled.

It will be apparent to those skilled in the art that various modifications and variations can be made in the present disclosure without departing from the scope or spirit of the disclosure. Other embodiments of the disclosure will be apparent to those skilled in the art from consideration of the specification and practice of the disclosure disclosed herein. It is intended that the specification and examples be considered as exemplary only, with a true scope and spirit of the disclosure being indicated by the following claims.

The patentable scope of the disclosure is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A composite comprising:
from about 50 wt. % to about 90 wt. % of a thermoplastic resin, wherein the thermoplastic resin comprises a polycarbonate polysiloxane copolymer; and
from about 10 wt. % to about 50 wt. % of a carbon-based filler,
wherein the composite exhibits a dielectric constant ε' of between 5 and 20 and a dissipation loss ε" of between 0.1 and 6, measured at frequencies between about 10 and about 120 GHz and
wherein the combined weight percent value of all components does not exceed 100 wt. %, and all weight percent values are based on the total weight of the composite.

2. The composite according to claim 1, wherein the composite has a dissipation factor (Df) of from about 0.003 to about 1 when determined as a ratio of ε" and ε' measured in transmission mode.

3. The composite according to claim 1 or 2, wherein a 3.175 mm thick molded plaque comprising the composite absorbs at least 20% of incident microwave radiation at frequencies from about 15 GHz to about 30 GHz and at least 50% of incident microwave radiation at frequencies from about 70 GHz to about 120 GHz.

4. The composite of any one of claims 1-3, wherein a ratio of thermoplastic resin to carbon-based filler is from about 9 to about 1, such that a surface (volume) electrical resistivity of the composite is greater than about 100 Ohm/square (1,000 Ohm.cm).

5. The composite of any one of claims 1-4, wherein the composite comprises from about 10 wt. % to about 50 wt. % of a carbon-based filler.

6. The composite of any one of claims 1-5, wherein the thermoplastic resin comprises a polycarbonate, a polyetherimide, a polyphenylene ether, a polystyrene, a polysulfone, a polyester, a polyamide, copolymers thereof, or a combination thereof.

7. The composite of any one of claims 1-6, wherein the polycarbonate polysiloxane copolymer is present in an amount of from 10 wt. % to about 40 wt. % based on the total weight of the composite.

8. The composite of any one of claims 1-7, wherein the polycarbonate polysiloxane copolymer has a siloxane content of from about 5 wt. % to about 30 wt. % based on the total weight of the polycarbonate polysiloxane copolymer.

9. The composite of any one of claims 1-8, wherein a molded plaque comprising the composite exhibits microwave Attenuation of at least about -1 dB/cm in the K-band and at least - 5 dB/cm in the W-band, and a total Shielding Effectiveness of at least about 1 dB in the K-band and at least 5 dB in the W-band when measured according to a Free Space method.

10. The composite of any one of claims 1-9, wherein the carbon-based filler comprises carbon fibers, carbon powder, graphite, graphene, carbon platelets, carbon nanotubes, or a combination thereof.

11. The composite of any one of claims 1-10, wherein the carbon-based filler comprises carbon powder and is free of or substantially free of carbon nanotubes, carbon platelets, or carbon fibers.

12. The composite of any one of claims 1-11, wherein the composite is a component of an automotive radar sensor.

13. The composite of any one of claims 1-12, wherein the composite is a microwave absorptive device or a component thereof.

14. The composite of any one of claims 1-13, further comprising an additive material selected from the group consisting of: an antioxidant; a colorant; a de-molding agent; a dye; a flow promoter; a flow modifier; a light stabilizer; a lubricant; a mold release agent; a pigment; a colorant, a quenching agent; a thermal stabilizer; an ultraviolet (UV) absorbant; a UV reflectant; a UV stabilizer; an epoxy chain extender; a flame retardant; and combinations thereof.

15. An autoradar sensor for electromagnetic radiation comprising a composite, the composite comprising:
from about 50 wt. % to about 90 wt. % of a thermoplastic resin, wherein the thermoplastic resin comprises a polycarbonate polysiloxane copolymer; and
from about 10 wt. % to about 50 wt. % of a carbon-based filler,
wherein the composite exhibits a dielectric constant ε' of between 5 and 20 and a dissipation loss ε" of between 0.1 and 6, measured at frequencies between about 10 and 120 GHz and
wherein the combined weight percent value of all components does not exceed 100 wt. %, and all weight percent values are based on the total weight of the composite.
